# EUROPÄISCHE PATENTANMELDUNG

(11) **EP 4 109 045 A1**
(43) Veröffentlichungstag der Anmeldung: **28.12.2022**
(21) Anmeldenummer: 22174975.7
(22) Anmeldetag: 24.05.2022
(51) Int. Cl.: G01D 5/14, G01D 5/48, G01D 5/20, B61L 25/02

(54) **MAGNETISCHE WEGMESSEINHEIT, TRANSPORTVORRICHTUNG UND VERFAHREN**

(30) Priorität: 25.06.2021 DE 102021116521
(71) Anmelder: Turck Holding GmbH, 58553 Halver (DE)
(72) Erfinder: Voß, Christian, 58511 Lüdenscheid (DE); Penning, Raphael, 47051 Duisburg (DE); Bregulla, Markus, 47809 Krefeld (DE)
(74) Vertreter: DTS Patent- und Rechtsanwälte Schnekenbühl und Partner mbB

(57) **Zusammenfassung**

Die vorliegende Erfindung betrifft eine Wegmesseinheit zur absoluten Wegpositionsbestimmung eines auf einem vorbestimmten Fahrweg in Fahrtrichtung bewegbaren Fahrzeuges, wobei die Wegmesseinheit einen bewegten Wegsensor und eine Mehrzahl von Positionsgebern umfasst, wobei der Wegsensor eine Auswerteeinheit umfasst oder hiermit datenleitend verbunden werden kann. Hierbei sind die Mehrzahl von Positionsgebern voneinander beabstandet und auf festen Wegpositionen entlang des Fahrweges angeordnet, der Wegsensor ist an dem Fahrzeug angebracht und mit diesem entlang des Fahrweges verfahrbar, und weiterhin ist der Wegsensor derart am Fahrzeug anbringbar, dass er im Erfassungsbereich der Positionsgeber an diesen vorbei geführt werden kann und in der Einbaulage eine Erstreckung parallel zur Fahrtrichtung und gegenüber den Positionsgebern hat, die gleich oder größer ist als der Abstand von zwei Positionsgebern, wobei der Wegsensor ein induktiver, magnetischer und/oder magnetostriktiver Wegsensor ist. Weiterhin umfasst die Erfindung ein Transportsystem und ein Verfahren zum Betrieb eines Transportsystems mit einer derartigen Wegmesseinheit.

## Beschreibung

Die vorliegende Erfindung betrifft ein Wegmesssystem nach dem Oberbegriff des Anspruches 1, ein Transportsystem nach dem Oberbegriff des Anspruches 14 und ein Verfahren nach dem Oberbegriff des Anspruches 16.

Wegmessungen von Fahrzeugen auf vorgegebenen Bahnen sind im Stand der Technik grundsätzlich bekannt. Im einfachsten Fall läuft ein Messrad mit oder das Abrollen eines Transportrades wird sensorisch erfasst. Bei exakteren Lösungen, wird entlang eines Fahrweges eine geschlossene Markierung vorgesehen, die von einem Lesekopf erkannt wird.

Eine solche Anordnung zeigt beispielsweise die DE 3 825 097 A1, bei der zur Positionsmessung entlang einer Bahn ein Codeträger vorgesehen ist, der entlang seiner Längserstreckung eine geschlossene Reihe von Codemarken trägt. Eine an dem zugehörigen Fahrzeug angeordnete Codelesevorrichtung erfasst eine Abfolge von Codemarken und/oder das Codemarkenmuster und ermittelt hierdurch die Position des Fahrzeuges. Hierfür weist die Codelesevorrichtung eine zur Musterlänge identische Anzahl von Erfassungsköpfen oder -feldern auf. Diese Lösung ist sehr kostenintensiv und in Bereichen mit hohem Staub- oder Schmutzablagerungen und/oder in Kreuzungsbereich störanfällig oder nicht einsetzbar, denn der Ausfall von nur einer oder wenigen Codemarken führt zu einem Lesefehler.

Ein vergleichbares Positioniersystem zeigt die DE 20 2007 012 798 U1, bei der die Reihe von Codierungsmarken mittels einer mitfahrenden Kamera erfasst werden. Diese Lösung ist zwar nicht ganz so kostenintensiv, aber hinsichtlich der Einflüsse von Verschmutzungen und Staub sehr anfällig. Die Ausstattung von sehr langen Strecken mit Codemarken ist in analoger Weise aufwändig und wirtschaftlich nachteilig.

Es ist die Aufgabe der vorliegenden Erfindung eine verbesserte Wegmesseinheit zur Verfügung zu stellen, die hinsichtlich Verschmutzungen unempfindlich und gleichzeitig wirtschaftlich vorteilhaft ist.

Diese Aufgabe wird erfindungsgemäß gelöst durch ein Wegmesssystem nach den Merkmalen des Anspruchs 1, einem Transportsystem nach den Merkmalen des Anspruches 14 und einem Verfahren nach den Merkmalen des Anspruches 16. Vorteilhafte Ausgestaltungen sind in den jeweiligen, zugehörigen Unteransprüchen angegeben.

Die erfindungsgemäße Wegmesseinheit dienst zur absoluten Wegpositionsbestimmung eines auf einem vorbestimmten Fahrweg in Fahrtrichtung bewegbaren Fahrzeuges, wobei die Wegmesseinheit einen Wegsensor und eine Mehrzahl von Positionsgebern umfasst. Der Wegsensor selbst umfasst hierbei eine Auswerteeinheit oder Teile hiervon und/oder kann hiermit datenleitend verbunden werden. Der Begriff "Fahrzeug" ist hierbei nicht limitierend zu versehen und meint, wenn nichts Gegenteiliges genannt ist, jedes Fahrzeug, welches mindestens Abschnittsweise auf einer mechanisch- oder sensorgeführten fest vorgegebenen Bahn oder Bahnkurve bewegt wird.

Den Kern der Erfindung stellt dabei die Mehrzahl von Positionsgebern dar, die voneinander beabstandet und auf festen Wegpositionen entlang des Fahrweges angeordnet sind und der Wegsensor an dem Fahrzeug anbringbar und mit diesem entlang des Fahrweges verfahrbar ist. Dabei meint vorliegend "feste Wegpositionen", dass die Positionsgeber nicht mit dem Fahrzeug bewegt werden, sondern entlang des Fahrweges angebracht sind. Der Wegsensor ist hierbei derart am Fahrzeug anbringbar, dass er in seinem Erfassungsbereich an oder über den Positionsgebern vorbeigeführt werden kann. Der Wegsensor ist hierbei als ein induktiver, magnetischer und/oder magnetostriktiver Wegsensor ausgebildet.

Dabei weist der Wegsensor mindestens einen Sensorkopf und mindestens einen stab- oder quaderförmig, länglich erstreckten Erfassungskörper auf. Dabei ist der Sensorkopf dadurch bestimmt, dass hierin die Signalwandlung aus dem Erfassungskörper erfolgt und der Erfassungskörper ist der Anteil des Wegsensors, in oder mit welchem ein Messsignal erfasst wird, insbesondere physikalisch erfasst und von dort aus an den Sensorkopf geleitet wird. In der Einbaulage weist der Erfassungskörper eine Erstreckung parallel zur Fahrtrichtung und somit gegenüber den Positionsgebern auf, die gleich oder größer ist als der Hauptabstand von zwei benachbarten Positionsgebern.

Dabei sind die Positionsgeber entlang des Fahrweges voneinander in einem Hauptabstand beabstandet, der zwischen 0,5m bis 20m liegt, idealerweise beträgt der Hauptabstand 0,5m bis 6m.

Bei einer verbesserten Ausführungsform, sind die Positionsgeber als Positionsgeberpaare ausgebildet. Hierbei ist der Paarabstand von den beiden zugehörigen Positionsgebern eines Positionsgeberpaares wesentlich geringer als der vorgenannte Hauptabstand. Bei vorteilhaften Ausführungsformen, um einen "Paarabstand" von einem "Hauptabstand" zu unterscheiden, beträgt der Paarabstand 10% oder weniger des Hauptabstandes oder beträgt bei einer verbesserten Variante weniger als 5% des Hauptabstandes. Absolut liegt der Paarabstand aber mindestens zwischen 5cm bis 10cm und bei einer idealen Ausbildung beträgt der Paarabstand 6cm bis 8cm. Bei der Definition der Fahrstrecke sind hierbei zwei Betrachtungen möglich, nämlich dass die gesamte Fahrstrecke im Wesentlichen aus
- der Summe der Hauptabstände plus der Summe der Paarabstände besteht oder
- aus der Summer der Hauptabstände, wobei der Messpunkt für einen Hauptabstand für ein Positionsgeberpaar in der Mitte der Strecke liegt, die den Paarabstand definiert.

Bei einer weiter verbesserten Ausführungsform sind mindestens zwei Abstände von zwei Positionsgeberpaaren unterschiedlich groß, so dass aus diesem unitären Paarabstand als zusätzliche Information, die Absolutposition des Fahrzeuges bestimmbar ist, insbesondere auch redundant bestimmbar oder verifizierbar ist. Bei einer weiter verbesserten Ausführungsform ist jeder einzelne Paarabstand entlang des Fahrweges nur ein einziges Mal vorgesehen und ermöglicht somit eine unmittelbare Positionsbestimmung der zugehörigen Positionsgeber.

In analoger Weise ist es vorteilhaft, wenn mindestens die Hauptabstände zwischen zwei Positionsgebern unterschiedlich sind und idealerweise ein einzelner Hauptabstand entlang des Fahrweges nur ein einziges Mal vorgesehen ist. Somit kann aus der Erfassung eines einzelnen Hauptabstandes bereist eine Positionsinformation gewonnen werden.

Eine weitere Verbesserung besteht darin, wenn mindestens einzelne Positionsgeber durch ein weiteres, also redundantes Erfassungssystem identifiziert werden, wozu eine punktuelle, nicht-streckenhafte Erfassung erfolgt. Hierzu wird an dem Fahrzeug, insbesondere an oder in unmittelbarer Nachbarschaft von dem verfahrbaren Wegsensor ein Daten-Lesekopf vorgesehen. Die relative Lage dieses Daten-Lesekopfes relativ zu dem Wegsensor ist hierbei an geeigneter Stelle als Datensatz hinterlegt.

Auf dem mindestens einem Positionsgeber ist ein vom Daten-Lesekopf lesbarer Daten-TAG angeordnet, wobei es vorteilhaft ist, auf mehreren Positionsgebern jeweils ein Daten-TAG anzuordnen. Der Daten-TAG umfasst eine direkte oder mittelbare Information oder einen Datensatz über seine und/oder die Absolutposition des zugehörigen Positionsgebers. "Lesbar" bedeutet hierbei, dass die Information oder Daten vom Daten-Lesekopf empfangen und nachfolgend digital prozessiert werden können. Das Daten-TAG und der Daten-Lesekopf sind hierbei Teile eines kontaktlosen Datenübertragungssystem, insbesondere eines kontaktlosen daten-und energieübertragenden Systems, wie beispielsweise RFID, NFC, Bluetooth oder dergleichen. Als besonders robuste und wirtschaftliche Ausführungsform hat sich erwiesen, wenn der Daten-Lesekopf ein RFID-Lesekopf ist und der mindestens eine Positionsgeber einen RFID-TAG umfasst.

Eine Verbesserung des redundanten Erfassungssystems und damit der Wegmesseinheit kann erreicht werden, wenn der Daten-Lesekopf als Daten-Lese-Schreibkopf ausgebildet ist und mindestens ein Daten-TAG eines Positionsgebers vom Daten-Lese-Schreibkopf mit Daten beschrieben werden kann, insbesondere mit Positionsdaten.

Die hierzu nötigen Daten- und Versorgungselemente und insbesondere das kontaktlose Energieübertragen im Nahfeldbereich sind dem Fachmann bekannt und werden nachfolgend nicht weiter ausgeführt.

Üblicherweise weisen alle Positionsgeber Permanentmagnete auf, die die maximal mögliche Feldstärke erzeugt, wobei alle Positionsgeber identisch aufgebaut sind und auch dieselbe oder weitestgehend dieselbe Feldstärke aufweisen. Bei einer weiteren, verbesserten Ausführungsform ist vorgesehen, dass mindestens zwei Positionsgeber voneinander unterschiedliche magnetische Feldstärken aufweisen oder sogar gemäß einer weiteren Ausführungsform, die unterschiedlichen Feldstärken von mehreren Positionsgeber abschnittsweise auf dem Fahrweg ein mittels des Wegsensors identifizierbares Messwertmuster ergeben, insbesondere Feldstärkenmuster. Somit kann bereits aus der Feldstärke, insbesondere aus dem Maximum der Feldstärke beim Über- oder Vorbeifahren ein einzelner Positionsgeber vom System eineindeutig identifiziert werden.

Eine weitere Ausführungsform sieht vor, dass die Positionsgeber und/oder Positionsgeberpaare von dem Wegsensor positionsgenau bestimmt werden können, wobei der Wegsensor als magnetostriktiver Wegsensor ausgebildet ist, wobei in dem mindestens einen Erfassungskörper ein langgestrecktes ferromagnetisches Kernelement und eine elektrische Leitung angeordnet sind, und wobei der Sensorkopf einen Signalwandler umfasst und derart ausgebildet ist, dass ein magnetostriktiver Effekt als elektrisches Signal auswertbar ist. Hierbei wird mittels Stromimpulsen durch den elektrischen Leiter, der bspw. aus Kupfer, Silber oder Nickel oder einer Mischung hieraus ausgebildet ist, ein zirkuläres Magnetfeld erzeugt. Die Permanentmagnete der Positionsgeber erzeugen zum Impulsmagnetfeld orthogonal verlaufende magnetischen Feldlinien, welche gemeinsam im Kernelement gebündelt werden. Die so überlagerten Magnetfelder erzeugen eine elastische Deformation im Kernelement, welche sich nach beiden Seiten wellenartig ausbreitet.

Die zum freien Ende des Kernelementes laufende Deformation oder Welle wird dort üblicherweise mittels eines dämpfenden Elementes eliminiert. Die zum Sensorkopf laufende Deformation oder Welle wird mittels eines Signalwandlers erfasst und zu einem elektrischen Signal gewandelt und weiterverarbeitet.

Bei einer alternativen Ausführungsform ist der Wegsensor als induktiver Wegsensor ausgebildet, der mindestens zwei unabhängige Schwingkreise umfasst, welche mit unterschiedlichen elektrischen Größen und/oder Frequenzen ansteuerbar sind, so dass Positionsgeber positionsgenau bestimmbar sind.

Wiederum eine weitere Ausführungsform sieht vor, dass der Wegsensor als Hall-Effekt Wegsensor ausgebildet ist, der mittels magnetischer Positionsgeber, insbesondere mit jeweils unterscheidbarer Feldstärke, die Position eines einzelnen Positionsgebers ermitteln kann. Hierbei kann der Wegsensor auch aus einer Vielzahl von einzelnen Hall-Sensoren aufgebaut sein, die gemeinsam auf einer langgestreckten Tragstruktur getragen werden.

Bei sehr langen Fahrtstrecken ist die erforderliche große Anzahl an Positionsgebern gegebenenfalls wirtschaftlich nachteilig, insbesondere wenn die Positionsgeber zusätzlich gegen mechanische Beeinträchtigungen baulich geschützt werden müssen und oder nicht in allen Streckenbereichen im erforderlichen Mindestabstand anbringbar sind. Dies könnte beispielsweise in Kreuzungs- oder Beladebereichen der Fall sein, in denen regelmäßig starke Verschmutzungen und Überdeckungen vorkommen. Somit besteht eine weitere, vorteilhaften Ausführungsform des Wegsensors darin, dass dieser mindestens zweigeteilt ist und derart in Fahrrichtung hintereinander in einem Abstand an dem Fahrzeug anbringbar ist, dass der erste Teil des Wegsensor im bestimmungsgemäßen Betrieb mit einem ersten Positionsgeber in Wirkverbindung steht und der zweite Wegsensor oder Wegsensorteil zeitgleich mit einem zweiten Positionsgeber in Wirkverbindung steht, wobei der erste und zweite Positionsgeber regelmäßig nicht unmittelbar benachbart sind. Der Abstand zwischen dem ersten und zweiten Messensorteil ist abhängig von der Größe des Fahrzeuges bzw. den Anbringungsmöglichkeiten über Tragstrukturen, wie ggf. Tragarmen.

Die Begriffe "Wirkverbindung" und "Erfassungsbereich" werden derart verwendet, dass im Erfassungsbereich der Wegsensor mit einen Positionsgeber erkennen, d.h. erfassen kann. Im Erfassungsbereich besteht eine Wirkverbindung derart, dass physikalische Effekte zwischen Positionsgeber und Wegsensor wirken und auswertbar sind. Wegen der engen Verknüpfung werden "Wirkverbindung" und "Erfassungsbereich" hierin gelegentlich synonym verwendet.

Alle hierin gegebenen Ausführungen zu den Haupt- und Paarabständen finden bei einem geteilten Wegsensor in analoger Weise Anwendung.

Somit sieht eine Ausführungsform oder Variante beispielsweise vor, dass die Abstände der Positionsgeber unterschiedlich sind, wobei die Unterschiede derart unitär sind, dass bei der gleichzeitigen Erfassung unterschiedlicher Positionsgeber von den im Anbringungsabstand distanzierten ersten und zweiten Wegsensor, mindestens zeitweise die jeweilige, eindeutige Absolutposition auf dem Fahrweg erfassbar und/oder hieraus ableitbar ist.

Die Erfindung umfasst auch ein Transportsystem, zu welcher ein auf einem definierten Fahrweg bewegbares Fahrzeug gehört, insbesondere ein Fahrzeug, welches auf einem als Schienenstrang ausgebildeten Fahrweg bewegbar ist.

Kern ist hierbei, dass das Transportsystem eine Wegmesseinheit nach einem der vorstehend genannten Ausführungsvarianten oder Kombinationen dieser Ausführungsformen umfasst. Idealerweise ist das Fahrzeug ein Kran oder Kranwagen, der stehend oder hängend geführt ist. Eine Verbesserung besteht darin, wenn das Transportsystem auch den Fahrweg umfasst.

Weiterhin ist von der Erfindung ein Verfahren zum Betrieb eines Transportsystems umfasst, welches das vorstehend genannte Transportsystem in einer der Ausführungsformen oder Kombinationen hiervon umfasst. Hierbei ist mindestens ein Datenspeicher und eine Steuer- und Auswerteeinheit vorgesehen ist, wobei im Datenspeicher die Abstände der Positionsgeber, der Positionsgeberpaare und/oder die Längenausdehnung (Erstreckung) des mindestens einen Wegsensors und/oder der Wegsensorteile hinterlegt sind. Mittels der Steuer- und Auswerteeinheit wird die Absolutposition des Fahrzeuges und/oder des Wegsensors relativ zum Fahrweg ermittelt. Die Steuer- und Auswerteeinheit ist hierbei nicht limitierend zu verstehen und kann aus ein oder mehreren Untereinheiten gebildet sein, die beispielsweise zentral und/oder teilweise im oder am Fahrzeug oder dem Wegsensor angeordnet sind und im Datenaustausch miteinander stehen, insbesondere über einen Datenbus im Datenaustausch miteinander stehen.

Bei einer verbesserten Verfahrensvariante wird eine redundante Erfassung vorgenommen, indem zur Ermittlung und/oder Verifizierung der Absolutposition des Fahrzeuges und/oder des Wegsensors und/oder mindestens eines Teils des Wegsensors die relative Lage eines Positionsgebers zu dem bewegten Wegsensor/- teil und mindestens eine der folgenden Informationen genutzt wird:
- Anzahl der von einer Ausgangsposition aus erfassten oder überfahrenen Positionsgeber,
- Position eines Positionsgeberpaares aus einem zuordbaren, unitären Paarabstand,
- Position von zwei benachbarten Positionsgebern aus einem zuordbaren, unitären Hauptabstand und/oder
- Position von zwei Positionsgebern aus einem zuordbaren, unitären Hauptabstand dieser beiden Positionsgeber, wenn diese von zwei in einem Abstand am Fahrzeug beabstandeten Wegsensoren oder Wegsensorteilen zeitgleich erfasst werden.

Auf diese Weise können unabhängig und parallel Erfassungen erfolgen und die absolute Richtigkeit der Positionsangaben überprüft und ggf. korrigiert/geregelt werden.

Bei einer weiteren, verbesserten Verfahrensvariante, wird jeder Positionsgeber eines Positionsgeberpaares separat erkannt, so dass sich hieraus eine zweifache Redundanz ergibt.

Bei einer verbesserten Ausführungsform wird durch die Steuer- und Auswerteeinheit durch Plausibilitätsverfahren eine fehlerhafte Positionsgeberinformation erkannt und automatisch korrigiert, insbesondere sobald ein benachbarter und/oder nachfolgender Positionsgeber und/oder ein benachbartes und/oder nachfolgendes Positionsgeberpaar durch den Wegsensor erkannt wird. Dies könnte der Fall sein, wenn ein Positionsgeber metallisch überdeckt oder sonst funktional beeinträchtig worden ist. Weiterhin veranlasst die Steuer- und Auswerteeinheit einen Hinweis an eine hierfür vorgesehene Überwachungs- oder Wartungseinheit.

Bei einer weiter verbesserten Verfahrensvariante wird mindestens ein Positionsgeber mittels eines Daten-TAGs, der an oder im Positionsgeber angeordnet ist, als Absolutposition auf dem Fahrweg durch einen am Fahrzeug angebrachten Daten-Lesekopf erfasst und an die Steuer- und Auswerteeinheit weitergeleitet. Die Absolutposition wird hierbei als absolute Weginformation und/oder eine beliebig geartete Kennung beschrieben, insbesondere in Form von Zahlen, Buchstaben oder einer Binär-Codierung. Vorteilhafterweise ist der Daten-Lesekopf als Daten-Lese-Schreibkopf ausgebildet, so dass der Daten-TAG des Positionsgebers mindestens einmal durch den Daten-Lese-Schreibkopf mit verfahrensrelevanten Daten beschrieben werden. Der Bedarf der Definition von Positionsgebern und damit des Beschreibens der Daten-TAG ist insbesondere nach der Installation gegeben. Somit besteht eine vorteilhafte Verfahrensvariante darin, dass die Absolutpositionen und/oder Reihenfolge der Positionsgeber und/oder der Positionsgeberpaare nach der Inbetriebnahme eines Fahrweges mit einem Fahrzeug durch eine Kalibrierungs- und Einrichtfahrt automatisch erfolgt. Hierbei werden die erstmalig erfassten Absolutpositionen und/oder deren Reihenfolge in einem Datenspeicher der Steuer- und Auswerteeinheit hinterlegt und für weitere Fahrten des Fahrzeuges genutzt. Eine Kalibrierungs- und Einrichtfahrt kann zur Validierung des Wegmesssystems bedarfsweise wiederholt werden, wozu insbesondere vor jeder Kalibrierungs- und Einrichtfahrt bestmögliche Bedingungen vorliegen sollten, wie keine Feuchte, kein Schmutz- oder Staub, langsame Fahrt, korrekter Sitz aller Bauteile, etc.

Somit besteht ein sehr großer Vorteil darin, dass bei der bauseitigen Positionierung der Positionsgeber Rücksicht auf lokale Besonderheiten, wie Fahrwege, Schüttbereiche und dergleichen genommen werden kann, weil nur die maximalen und minimalen Haupt- und Paarabstände wirklich zwingend eingehalten werden müssen.

Es ist ein Bedarf, die Einhaltung eines Fahrweges beziehungsweise seitliche Abweichungen des Fahrzeuges von seiner Fahrstrecke schnellstmöglich zu erfassen. Somit wird bei einer verbesserten Ausführungsvariante des Verfahren die Wirkprinzipstärke, insbesondere mittels der maximalen Wirkprinzipstärke (IST-Wirkprinzipstärke), bei einer Über- oder Vorbeifahrt an einem Positionsgeber ermittelt und hieraus quantifiziert, wie groß in Querrichtung zur Fahrtstrecke die Abweichung des Wegsensors zum jeweiligen Positionsgeber ist. Es erfolgt also mittels der Steuer- und Auswerteeinheit ein Abgleich der IST-Wirkprinzipstärke von einer SOLL-Wirkprinzipstärke oder erwarteten Wirkprinzipstärke. Abhängig vom Grad der Abweichung wird ein Warn- und/oder Steuersignale veranlasst. Der vorbestimmte Fahrweg oder SOLL-Fahrweg wird somit überwacht, ohne weitere Sensoren oder Bauteile vorsehen zu müssen, wobei der Fahrweg nicht gradlinig, das heißt ohne Kurven, ausgebildet sein muss.

Schließlich sieht eine weitere Verfahrensvarianten vor, dass die Ermittlung und/oder Validierung der Absolutposition des Fahrzeuges zusätzlich durch die Erfassung und/oder Auswertung von mindestens einem der folgenden Erfassungsschritte und/oder Erfassungsmittel erfolgt:
a) Erfassung der Fahrgeschwindigkeit des Fahrzeuges und Abgleich mit einer SOLL-Dauer oder erwarteten Zeitpunkt bis zum Erreichen eines definierten Positionsgebers bei bekannter Fahrgeschwindigkeit,
b) Erfassung und Auswertung einer SOLL-Dauer der Erfassung eines Paarabstandes eines Positionsgeberpaares bei bekannter Fahrgeschwindigkeit oder
c) Erfassung und Auswertung von relevanten Motorbetriebsdaten des Fahrzeuges, insbesondere von Laufwegen, Laufhäufigkeiten und Inkrementaldaten eines das Fahrzeug antreibenden Motors.

Somit kann die Bestimmung der Absolutposition des Fahrzeuges sehr einfach mehrfach redundant vorgenommen werden und eine höchste Absicherung der Echtheit und Richtigkeit nötiger Steuer- und Regelungsdaten kann erreicht werden.

Weitere Einzelheiten und Vorteile der Erfindung sollen nun anhand von in den Zeichnungen dargestellten Ausführungsbeispielen näher erläutert werden.

Es zeigen:
- Fig. 1: eine schematische Seitenansicht der Wegmesseinheit,
- Fig. 2: eine schematische Seitenansicht einer alternativen Wegmesseinheit,
- Fig. 3: eine Detaildarstellung einer redundanten Erfassung und
- Fig. 4: eine alternative Ausführungsform der Wegmesseinheit mit einem geteilten Wegsensoren.

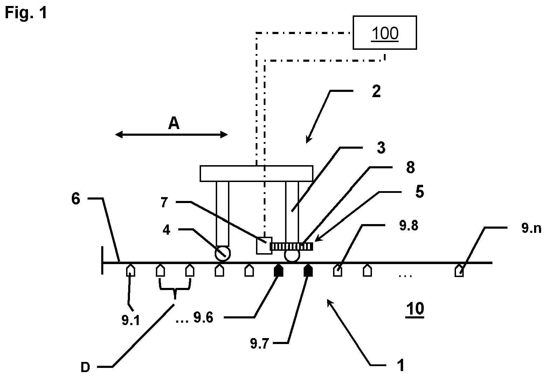

In der Figur 1 ist die Wegmesseinheit 1 zusehen, die als Wegsensor 5 mit einem Sensorkopf 7 und einem langgestreckten Erfassungskörper 8 auf der Höhe des Laufrades 4 am Fahrzeug 2 beziehungsweise an der Karosserie 3 befestigt ist. Karosserie 3 ist vorliegend sehr weit zu verstehen und meint jegliche Fahrzeugteile, an oder auf welchen eine Wegsensor 5 befestigt werden kann. Das Fahrzeug 2 ist auf einem Fahrweg 6 angeordnet, auf welchem es mittels nicht dargestellter Motoren in Fahrtrichtung A verfahrbar ist. Alle üblichen und nötigen Komponenten, insbesondere die Antriebsmotoren, Steuerungselemente und/oder Arbeitsmodule, wie Ladefläche, Bearbeitungs- und Handhabungszeuge, sind nicht dargestellt. Das Fahrzeug 2 weist mindestens Teile einer Steuer- und Auswerteeinheit 100 auf, mit welcher alle relevanten Komponenten, so auch der Wegsensor 5 bzw. dessen Steuerkopf 7 datenleitend verbunden ist, wie mit den strichpunktierten Linien angedeutet wurde.

Das Fahrzeug 2 ist auf einem skizzenhaft dargestellten Fahrweg 6 geführt, der vorliegend eine Schiene darstellen soll. Entlang des Fahrweges 6 sind in definierten, ggf. gleichmäßigen Hauptabständen D Positionsgeber 9.1 bis 9.n angebracht, in dem diese mindestens teilweise im Boden 10 eingelassen sind. Jeder Positionsgeber 9.1 bis 9.n weist einen starken, nicht dargestellten Permanentmagneten auf, dessen magnetisches Feld von dem als magnetostriktiver Sensor ausgebildete Wegsensor 5 erfasst wird. In dem gezeigten Beispiel erfasst der Wegsensor 5 die beiden Positionsgeber 9.6 und 9.7.

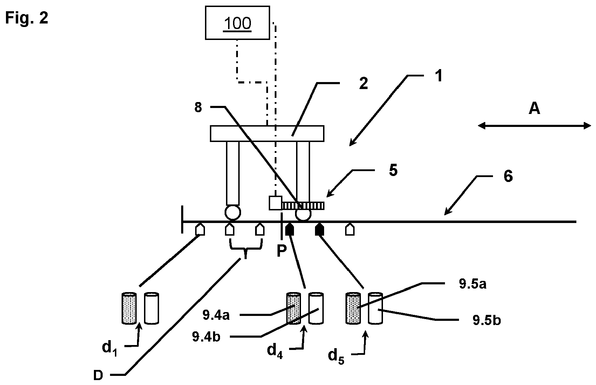

Bei der in Figur 2 gezeigten Ausführungsform sind die Positionsgeber 9.1 bis 9.6 in identischen Hauptabständen D entlang des Fahrweges 6 angeordnet, wobei die Positionsgeber 9.1, 9.4 und 9.5 als Positionsgeberpaare 9.1a/b, 9.4a/b und 9.5a/b ausgebildet sind, weil es sich hierbei beispielsweise um besonders sensible Fahrwegsabschnitte handelt, in welchem eine redundante Erfassung gewünscht wird, wie beispielsweise Be- und Entladebereiche. Der Wegsensor 5 steht an der Fahrwegposition P und überdeckt die Positionsgeberpaare 9.4a/b und 9.5a/b vollständig, erfasst also insgesamt vier einzelne Positionsgeber. Die Positionsgeber 9.4a und 9.4b sind durch einen definierten Paarabstand d₄ und die Positionsgeber 9.5a und 9.5b durch einen definierten Paarabstand d₅ voneinander beabstandet, wobei d₄ gleich oder im Wesentlichen gleichgroß ist wie d₅. Mittels der Auswerteeinheit wird somit der besondere Bereich durch die Anwesenheit der mit 7,5cm definierten Paarabstände d₁, d₄ und d₅ redundant zu der absoluten Position der vier Positionsgeber erkannt.

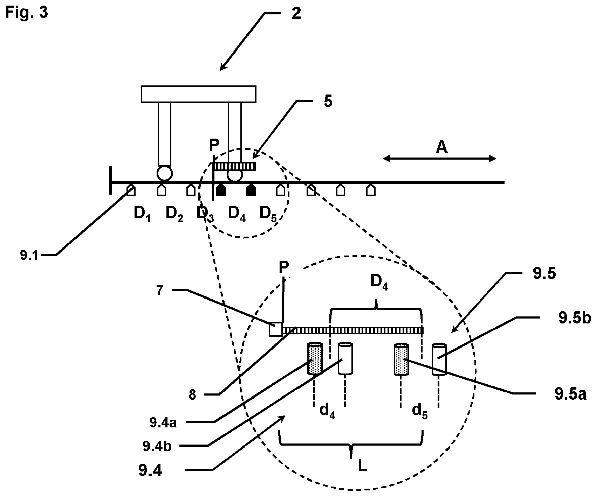

In der Ausführungsform nach Figur 3, die ähnlich zu der nach Figur 2 ist, sind die Paarabstände d₄ und d₅ unterschiedlich groß. Der Wegsensor 5 befindet sich an Fahrwegposition P. Der Hauptabstand D₄, wie in der unteren Detaildarstellung gezeigt, definiert sich durch die beiden Mittellagen zwischen den Positionsgeberpaaren 9.4a/b und 9.5a/b. Die Längenerstreckung L des Erfassungskörpers 8 überragt das Positionsgeberpaar 9.4a/b und den ersten Positionsgeber 9.5a des Positionsgeberpaares 9.5a/b. Aufgrund der gespeicherten Maße: Längenerstreckung L, Absolutposition des Positionsgebers 9.4a und 9.4b, Paarabstandes d₄ und Absolutposition des Positionsgebers 9.5a, kann die Absolutposition des Fahrzeuges 2 bzw. des Wegsensors 5 mehrfach redundant gemessen und verifiziert werden. Die Steuer uns Auswerteeinheit ist vorliegend nicht dargestellt. Die Paarabstände d₄ und d₅ unterscheiden sich in der Größe um 2mm.

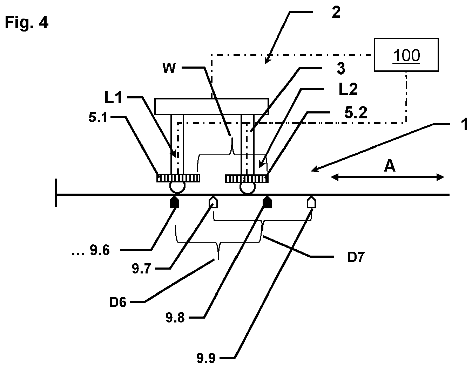

Schließlich zeigt die Figur 4 eine alternative Ausführungsform der Wegmesseinheit 1, bei welcher der Wegsensor 5 aus einem ersten Wegsensorteil 5.1 und einem zweiten Wegsensorteil 5.2 besteht. Die beiden Wegsensorteile 5.1, 5.2 sind im Abstand W voneinander distanziert und vorne und hinten an der Karosserie 3 am Fahrzeug 2 angebracht. Grundsätzlich sind die Wegsensorteile 5.1, 5.2 vollwertige Wegsensoren, die über die Auswerteeinheit 100 oder integrierte Prozessoreinheiten wie ein Messsensor arbeiten. Der große Vorteil besteht darin, dass sehr große Strecken überspannt werden können, ohne den Messensor selbst sehr groß zu dimensionieren. Weiterhin sind auch der Abstand W und die beiden Erstreckungslängen L1, L2 der bspw. beiden Erfassungskörper weitere Variable, die zur mehrfach redundanten Erfassung der Absolutposition des Fahrzeuges 2 nutzbar gemacht werden können. Erstreckungslängen L1, L2 können gleich oder unterschiedlich groß sein.

Bei geteilten Wegsensoren, wird der Hauptabstand D6 nicht durch zwei benachbarte Positionsgeber definiert, welche von einem einzigen Erfassungskörper überdeckt werden können, sondern durch den Abstand von Positionsgeber 9.6 zum übernächsten Positionsgeber 9.8, welche zeitgleich von den beiden Wegsensorteilen 5.1, 5.2 bzw. deren jeweiligen Erfassungskörpern überdeckt und erfasst werden können. Analog wird der Hauptabstand D7 durch den Abstand zwischen dem Positionsgeber 9.7 und 9.9 definiert. Analog zu den vorherigen Ausführungen, können die Hauptabstände oder Paarabstände auch teilweise unterschiedlich groß sein und natürlich kann auch mindestens einer der Wegsensoren hinsichtlich seiner Erstreckung so dimensioniert sein, dass er mehr als einen Positionsgeber gleichzeitig erfassen kann (nicht dargestellt).

Es ist für den Fachmann offensichtlich, dass die Ausführungsformen in speziellen Merkmalskombinationen beschreiben wurden, ohne dass dies limitierend zu verstehen ist. Vielmehr ist der Fachmann aufgefordert, die Merkmale in Abhängigkeit von dem jeweiligen Einsatzfall frei zu kombinieren.

### Bezugszeichenliste

- 1: Wegmesseinheit
- 2: Fahrzeuges
- 3: Karosserie
- 4: Laufrad
- 5: Wegsensor
5.1, 5.2 Wegsensorteil
- 6: Fahrweg
- 7: Sensorkopf
- 8: Erfassungskörper
- 9: Positionsgeber (auch 9.1 ... 9.n)
9.4a/b, 9.5a/b Positionsgeberpaar
- 10: Boden
- 100: Auswerteeinheit

- A: Fahrtrichtung
- D: Hauptabstand (auch D₁ ... Dₙ)
- d: Paarabstand (auch d₁ ... dₙ)
- L: Erstreckung
- P: Fahrwegposition
- W: Abstand

## Patentansprüche

1. Wegmesseinheit (1) zur absoluten Wegpositionsbestimmung eines auf einem vorbestimmten Fahrweg (6) in Fahrtrichtung (A) bewegbaren Fahrzeuges (2), wobei die Wegmesseinheit (1) einen Wegsensor (5) und eine Mehrzahl von Positionsgebern (9.1 ... 9.n) umfasst, wobei der Wegsensor (5) eine Auswerteeinheit (100) umfasst und/oder hiermit datenleitend verbunden werden kann, **dadurch gekennzeichnet, dass**
- die Mehrzahl von Positionsgebern (9.1 ... 9.n) voneinander beabstandet und auf festen Wegpositionen entlang des Fahrweges (6) angeordnet sind,
- der Wegsensor (5) an dem Fahrzeug (2) anbringbar und mit diesem entlang des Fahrweges (6) verfahrbar ist, und wobei der Wegsensor (5) derart am Fahrzeug anbringbar ist, dass er im Erfassungsbereich der Positionsgeber (9.1 ... 9.n) an diesen vorbei geführt werden kann, und wobei der Wegsensor (5) ein induktiver, magnetischer und/oder magnetostriktiver Wegsensor ist.

2. Wegmesseinheit (1) nach Anspruch 1, **dadurch gekennzeichnet, dass** der Wegsensor (5) mindestens einen Sensorkopf (7) und mindestens einen Erfassungskörper (8) umfasst, wobei der Erfassungskörper (8) in der Einbaulage eine Erstreckung (L) parallel zur Fahrtrichtung (A) und gegenüber den Positionsgebern (9.1 ... 9.n) hat, die gleich oder größer ist als der Hauptabstand (D) von zwei benachbarten Positionsgebern (9.1 ... 9.n).

3. Wegmesseinheit (1) nach einem der Ansprüche 1 oder 2, **dadurch gekennzeichnet, dass** die Positionsgeber (9.1 ... 9.n) entlang des Fahrweges (6) in einem Hauptabstand (D) von 0,5m bis 20m angeordnet sind, insbesondere in einem Hauptabstand (D) von 0,5m bis 6m.

4. Wegmesseinheit (1) nach einem der vorherigen Ansprüche, **dadurch gekennzeichnet, dass** mindestens ein Positionsgeber (9.1 ... 9.n) als ein Positionsgeberpaar (9.4a/b, 9.5a/b) ausgebildet ist, wobei der Paarabstand (d) der beiden Positionsgeber eines Positionsgeberpaares (9.4a, 9.4b; 9.5a, 9.5b) wesentlich geringer als der Hauptabstand (D) ist, vorrangig kleiner als 10% des Hauptabstandes (D), insbesondere kleiner als 5% beträgt.

5. Wegmesseinheit (1) nach Anspruch 4, **dadurch gekennzeichnet, dass** mindestens einer der Paarabstände (d) von zwei Positionsgeberpaare (9.4a/b, 9.5a/b) unterschiedlich sind, insbesondere ein einzelner Paarabstand (d₁ ... dₙ) entlang des Fahrweges (6) nur ein einziges Mal vorgesehen ist.

6. Wegmesseinheit (1) nach einem der vorherigen Ansprüche, **dadurch gekennzeichnet, dass** mindestens die Hauptabstände (D₁ ... Dₙ) zwischen zwei Positionsgebern (9.1 ... 9.n) unterschiedlich sind, insbesondere ein einzelner Hauptabstand (D₁ ... Dₙ) entlang des Fahrweges (6) nur ein einziges Mal vorgesehen ist.

7. Wegmesseinheit (1) nach einem der vorherigen Ansprüche, **dadurch gekennzeichnet, dass** an dem Fahrzeug (2), insbesondere an dem verfahrbaren Wegsensor (5), ein Daten-Lesekopf und auf mindestens einem Positionsgeber (9.1 ... 9.n) ein vom Daten-Lesekopf lesbarer Daten-TAG angeordnet ist, insbesondere auf mehreren Positionsgebern (9.1 ... 9.n) jeweils ein Daten-TAG angeordnet ist, wobei der mindestens eine Daten-TAG eine Information über seine und/oder die Absolutposition des zugehörigen Positionsgebers (9.1 ... 9.n) umfasst und diese Information von Daten-Lesekopf lesbar ist, und wobei Daten-TAG und Daten-Lesekopf mindestens Teil eines kontaktlosen Datenübertragungssystem sind, insbesondere eines kontaktlosen daten- und energieübertragenden Systems sind.

8. Wegmesseinheit (1) nach Anspruch 7, **dadurch gekennzeichnet, dass** der Daten-Lesekopf ein RFID-Lesekopf ist und der mindestens eine Positionsgeber (9.1 ... 9.n) einen RFID-TAG umfasst.

9. Wegmesseinheit (1) nach Anspruch 7 oder 8, **dadurch gekennzeichnet, dass** der Daten-Lesekopf als Daten-Lese-Schreibkopf ausgebildet ist und mindestens ein Daten-TAG eines Positionsgebers (9.1 ... 9.n) vom Daten-Lese-Schreibkopf mit Daten beschrieben werden kann, insbesondere mit Positionsdaten.

10. Wegmesseinheit (1) nach einem der vorherigen Ansprüche, **dadurch gekennzeichnet, dass** mindestens zwei Positionsgeber (9.1 ... 9.n) voneinander unterschiedliche magnetische Feldstärken aufweisen, insbesondere die unterschiedlichen Feldstärken der Positionsgeber (9.1 ... 9.n) mindestens abschnittsweise auf dem Fahrweg (6) ein mittels des Wegsensors (5) identifizierbares Messwertmuster ergeben, insbesondere Feldstärkenmuster.

11. Wegmesseinheit (1) nach einem der vorherigen Ansprüche, **dadurch gekennzeichnet, dass** die Positionsgeber (9.1 ... 9.n) und/oder Positionsgeberpaare (9.4a, 9.4b; 9.5a, 9.5b) von dem Wegsensor (5) positionsgenau bestimmt werden können, wobei der Wegsensor (5)
**a)** als magnetostriktiver Wegsensor ausgebildet ist, wobei in dem mindestens einen Erfassungskörper (8) ein langgestrecktes ferromagnetisches Kernelement und eine elektrische Leitung angeordnet sind, und wobei der Sensorkopf (7) einen Signalwandler umfasst und derart ausgebildet ist, dass ein magnetostriktiver Effekt als elektrisches Signal auswertbar ist,
b) als induktiver Wegsensor ausgebildet ist, umfassend mindestens zwei unabhängige Schwingkreise, welche mit unterschiedlichen elektrischen Größen und/oder Frequenzen ansteuerbar sind, so dass Positionsgeber (9.1 ... 9.n) positionsgenau bestimmbar sind oder
c) als magnetischer Wegsensor ausgebildet ist, der mittels Hall-Effekt Positionsgeber (9.1 ... 9.n) bestimmt kann, insbesondere mit jeweils unterscheidbarer Feldstärke bestimmen kann.

12. Wegmesseinheit (1) nach einem der vorherigen Ansprüche, **dadurch gekennzeichnet, dass** der Wegsensor (5) mindestens zweigeteilt ist und derart in Fahrrichtung (A) hintereinander in einem Abstand (W) an dem Fahrzeug (2) anbringbar ist, dass
- der erste Teil des Wegsensor (5.1) im bestimmungsgemäßen Betrieb mit einem ersten Positionsgeber (9.1 ... 9.n-1) in Wirkverbindung steht, und wobei
- der zwei Wegsensor (5.2) zeitgleich mit einem zweiten Positionsgeber (9.2 ... 9.n+1) in Wirkverbindung steht.

13. Wegmesseinheit (1) nach Anspruch 12, **dadurch gekennzeichnet, dass** die Abstände der Positionsgeber (9.1 ... 9.n) unterschiedlich sind, wobei die Unterschiede derart unitär sind, dass bei der gleichzeitigen Erfassung unterschiedlicher Positionsgeber (9.1 ... 9.n) von den im Abstand (W) beabstandeten ersten und zweiten Wegsensorteil (5.1, 5.2), mindestens zeitweise die jeweilige, eindeutige Absolutposition auf dem Fahrweg (6) erfassbar und/oder hieraus ableitbar ist.

14. Transportsystem umfassend ein auf einem definierten Fahrweg (6) geführt bewegbares Fahrzeug (2), insbesondere auf einem als Schienenstrang ausgebildeten Fahrweg (6), **dadurch gekennzeichnet, dass** das Transportsystem eine Wegmesseinheit (1) nach einem der vorherigen Ansprüche 1 bis 13 umfasst, wobei das Fahrzeug (2) insbesondere ein Kran, Schienen- oder Kranwagen ist.

15. Transportsystem nach Anspruch 14, **dadurch gekennzeichnet, dass** das Transportsystem den Fahrweg (6) umfasst.

16. Verfahren zum Betrieb eines Transportsystems, **dadurch gekennzeichnet, dass** das Transportsystem nach einem der Ansprüche 14 oder 15 ausgebildet ist, wobei mindestens ein Datenspeicher und eine Steuer- und Auswerteeinheit (100) vorgesehen ist, wobei im Datenspeicher die Abstände der Positionsgeber (9.1 ... 9.n), der Positionsgeberpaare (9.4a/b, 9.5a/b) und/oder die Längenausdehnung des mindestens einen Wegsensors (5) hinterlegt sind, und wobei mittels der Steuer- und Auswerteeinheit (100) die Absolutposition des Fahrzeuges (2) und/oder des Wegsensors (5) relativ zum Fahrweg (6) ermittelt wird.

17. Verfahren nach Anspruch 16, **dadurch gekennzeichnet, dass** zur Ermittlung und/oder Verifizierung der Absolutposition des Fahrzeuges (2) und/oder des Wegsensors (5) die relative Lage eines Positionsgebers (9.1 ... 9.n) relativ zu dem mindestens einen bewegten Wegsensor (5) und mindestens eine der folgenden Informationen genutzt wird:
- Anzahl der von einer Ausgangsposition aus erfassten oder überfahrenen Positionsgeber (9.1 ... 9.n),
- Position eines Positionsgeberpaares (9.4a/b, 9.5a/b) aus einem zuordbaren, unitären Paarabstand (d₁ ... dₙ),
- Position von zwei benachbarten Positionsgebern (9.1 ... 9.n) aus einem zuordbaren, unitären Hauptabstand (D₁ ... Dₙ) und/oder
- Position von zwei Positionsgebern (9.1 ... 9.n) aus einem zuordbaren, unitären Abstand dieser beiden Positionsgebern (9.1 ... 9.n), wenn diese von zwei in einem Abstand (W) am Fahrzeug (2) beabstandeten Wegsensoren (5.1, 5.2) oder Wegsensorteilen zeitgleich erfasst werden.

18. Verfahren nach einem der Ansprüche 16 oder 17, **dadurch gekennzeichnet, dass** jeder Positionsgeber (9.1 ...9.n) eines Positionsgeberpaares (9.4a, 9.4b; 9.5a, 9.5b) separat erkannt wird und sich hieraus eine zweifache Redundanz ergibt.

19. Verfahren nach einem der Ansprüche 16 bis 18, **dadurch gekennzeichnet, dass** durch die Steuer- und Auswerteeinheit (100) eine fehlerhafte Positionsgeberinformation automatisch korrigiert wird, sobald ein benachbarter und/oder nachfolgender Positionsgeber (9.1 ... 9.n) und/oder ein benachbartes und/oder nachfolgendes Positionsgeberpaar (9.4a, 9.4b; 9.5a, 9.5b) durch den Wegsensor (5) erkannt wird.

20. Verfahren nach einem der Ansprüche 16 bis 19, **dadurch gekennzeichnet, dass** mindestens ein Positionsgeber (9.1 ...9.n) mittels eines Daten-TAGs als Absolutposition auf dem Fahrweg (6) erfasst wird, durch einen am Fahrzeug (2) angebrachten Daten-Lesekopf, wobei die Absolutposition als absolute Weginformation und/oder eine beliebig gearteten Kennung erfolgen kann, insbesondere in Form von Zahlen, Buchstaben oder einer Binär-Codierung.

21. Verfahren nach Anspruch 20, **dadurch gekennzeichnet, dass** der Daten-Lesekopf ein Daten-Lese-Schreibkopf ist und der Daten-TAG des mindestens einen Positionsgeber (9.1 ... 9.n) mindestens einmal durch den Daten-Lese-Schreibkopf mit verfahrensrelevanten Daten beschrieben wird.

22. Verfahren nach Anspruch 21, **dadurch gekennzeichnet, dass** die Absolutpositionen und/oder Reihenfolge der Positionsgeber (9.1 ... 9.n) und/oder der Positionsgeberpaare (9.4a/b, 9.5a/b) nach der Inbetriebnahme eines Fahrweges (6) mit einem Fahrzeug (2) durch eine Kalibrierungs- und Einrichtfahrt automatisch erfolgt, und wobei die derart erfassten Absolutpositionen und/oder Reihenfolge in einem Datenspeicher der Steuer- und Auswerteeinheit (100) hinterlegt und für weitere Fahrten des Fahrzeuges (2) genutzt wird.

23. Verfahren nach einem der Ansprüche 16 bis 22, **dadurch gekennzeichnet, dass** die Wirkprinzipstärke, insbesondere die maximale Wirkprinzipstärke (IST-Wirkprinzipstärke), bei einer Über- oder Vorbeifahrt ein Merkmal für den Grad der Abweichung des Wegsensors (5) zum jeweiligen Positionsgeber (9.1 ... 9.n) quer zum Fahrweg (6) ist, und wobei die Steuer- und Auswerteeinheit (100) durch den Abgleich der IST-Wirkprinzipstärke von einer SOLL-Wirkprinzipstärke, Warn- und/oder Steuersignale veranlasst.

24. Verfahren nach einem der Ansprüche 16 bis 23, **dadurch gekennzeichnet, dass** sich eine die Ermittlung und/oder Validierung der Absolutposition des Fahrzeuges (2) zusätzlich durch die Erfassung und/Auswertung von mindestens einem der folgenden Erfassungsschritte und/oder Erfassungsmittel erfolgt:
a) Erfassung der Fahrgeschwindigkeit des Fahrzeuges (2) und Abgleich mit einer SOLL-Dauer oder Zeitpunkt bis zum Erreichen eines definierten Positionsgebers (9.1 ... 9.n),
b) Erfassung und Auswertung einer SOLL-Dauer der Erfassung eines Hauptabstandes bei bekannter Fahrgeschwindigkeit,
c) Erfassung und Auswertung einer SOLL-Dauer der Erfassung eines Paarabstandes (d, d₁ ... dₙ) eines Positionsgeberpaares (9.1 ... 9.n, 9.4a/b, 9.5a/b) bei bekannter Fahrgeschwindigkeit,
d) Erfassung und Aufwertung von relevanten Motorbetriebsdaten des Fahrzeuges (2), insbesondere von Laufwegen, Laufhäufigkeiten und Inkrementaldaten eines das Fahrzeug (2) antreibenden Motors.
